# EUROPEAN PATENT SPECIFICATION

(11) **EP 3 818 108 B1**
(45) Date of publication and mention of the grant of the patent: **31.08.2022**
(21) Application number: 19739354.9
(22) Date of filing: 04.07.2019
(51) Int. Cl.: C09C 1/56, C09D 11/324

(54) **METHOD FOR THE SURFACE OXIDATION OF CARBON BLACK NANOPARTICLES AND DISPERSIONS COMPRISING THEM.**
VERFAHREN ZUR OBERFLÄCHENOXIDATION VON RUSNANOPARTIKELN UND DIESE ENTHALTENDE DISPERSIONEN
PROCÉDÉ POUR L'OXYDATION EN SURFACE DE NANOPARTICULES DE NOIR DE CARBONE ET DISPERSIONS COMPRENANT DE TELLES NANOPARTICULES

(30) Priority: 05.07.2018 GB 201811076
(43) Date of publication of application: 12.05.2021
(60) Divisional application: 22160724.5
(73) Proprietor: Sun Chemical B.V., 1382 LV Weesp (NL)
(72) Inventor: WALLACE, Paul Andrew, Garden City Hertfordshire SG6 1BE (GB)
(74) Representative: TLIP Limited
(86) International application number: PCT/GB2019/051893
(87) International publication number: WO 2020/008199

(56) References cited:
- JP-B2- 3 795 961
- US-A1- 2004 244 622
- US-A1- 2005 120 914
- US-B1- 6 468 342

## Description

The present invention is concerned with a method for preparing a surface oxidised carbon black.

The nanoparticle dispersions may be used as ink concentrates for digital inkjet printing. Accordingly, the present invention is also concerned with ink compositions containing a surface oxidised carbon black for digital inkjet printing.

The production of ink concentrates suitable for digital inkjet printing presently requires milling of solid pigments or dyes to a suitable nanoparticle size and subsequent dispersion of the nanoparticles in a suitable carrier liquid containing stabilisers, such as a wetting agent or a dispersant.

The production is a batch process which is often time consuming and costly not least because the required milling is generally protracted and consumes a great deal of energy and large amounts of water and organic solvent.

Carbon black is an amorphous, high surface area organic material which is produced by the incomplete combustion of hydrocarbons. It is used as a pigment because of its low albedo (a measure of how much light is reflected). The exact composition of a given carbon black can vary but all carbon blacks used for ink jet printing possess an outer layer of chemisorbed oxygen species known as volatile content (because the content can be driven off at high temperatures, for example, above 950°C) .

A high level of volatile content is desirable for coating and pigment applications because the hydrophobicity of the surface is high and allows easier dispersal of carbon black particles in water or aqueous based solvents.

Accordingly, a carbon black suitable for an ink concentrate is generally prepared by milling of carbon black to nanoparticles followed by surface oxidation of the nanoparticles of carbon black.

The surface oxidation of carbon black, which provides for more stable dispersions of carbon black in aqueous based solvents, is carried out as a batch process and typically involves mixing of the carbon black with a basic hypochlorite solution (over 48 hours).

The chemical reaction is highly exothermic and is so difficult to control in batch processing as to present a serious health and safety concern for which expensive precautionary measures must be undertaken.

Further, the batch process tends to produce slightly different carbon blacks from batch to batch and the isolation of suitably sized nanoparticles of carbon black often requires expensive filtration techniques such as ultrafiltration.

Moreover, the carbon blacks produced by the batch process are not necessarily well adapted to inkjet printing and may require further processing in order to improve their dispersion and storage or to reduce such problems as inkjet nozzle clogging.

For example, JPH1036727 A1 discloses that improved dispersions of surface oxidised carbon black can be obtained by dispersion with a water soluble cationic surfactant based on certain trialkyl ammonium salts. US 6468342 B1 discloses that improved dispersions of surface oxidised carbon black can be obtained by washing out alkali metal content. US 2005/0120914 A1 discloses that a carbon black ink which is not prone to clogging can be obtained by surface oxidation of carbon black nanoparticles of selected size with concomitant milling that controls growth in nanoparticle size. US 2011/0316947 A1 discloses a carbon black ink including a resin providing for improved fixing on recording medium without binding to an inkjet nozzle plate. The ink is obtained by grafting a polymer to a surface oxidised carbon black followed by milling. JP 2002129065 A1 discloses that carbon black having excellent water dispersibility can be obtained by a high temperature (between 120°C and 550°C) and high pressure (between 4 MPa and 500000MPa) oxidation.

JP3795961 discloses compositions containing (A) an oxidized carbon black obtained by oxidizing (i) carbon black with (ii) a hypohalous acid and/or its salt in a wet state and (B) a water-soluble cationic surfactant in an aqueous liquid medium. The component A is obtained by oxidizing the component (i) finely dispersed in water by using the component (ii).

US6468342 discloses an aqueous pigment dispersion, which contains surface modified carbon black that is obtained by wet-oxidizing carbon black by using hypohalous acid and/or a salt thereof, and alkali metal cation, wherein the concentration of the alkali metal cation is not more than 2% by weight.

US2005/120914 discloses a modified carbon black obtained by carrying out oxidation treatment on a carbon black having a primary particle diameter of 11 to 18 nm, a BET specific surface area of at least 180 m²/g, a DBP oil absorption of at least 180 mL/100 g, and a value of the BET specific surface area (m²/g) divided by the DBP oil absorption (mL/100 g) of 0.75 to 1.3, wherein at least lactone groups and carboxyl groups are introduced onto the surface thereof, and the ratio of the mean particle diameter to the primary particle diameter is at least 8.5.

US2004/244622 discloses a dispersible colorant having a sufficiently high dispersion stability with a high functional group density on the surface and a resin component present on the surface, the resin component not separating from the surface, and a method for simply producing the same.

The present inventor has surprisingly found a continuous process for preparing a surface oxidised carbon black which provides directly for stable dispersions of surface modified carbon black that are highly suitable for inkjet printing.

The continuous process not only avoids the above-mentioned problems of batch processing but is straight forward to carry out. The process does not require milling of the starting carbon black to nanoparticles and does not need high temperature and pressure or complex filtration techniques or ion-exchange operations.

Accordingly, in a first aspect the present invention provides a method for the surface oxidation of carbon black, the method comprising continuously mixing a solution or slurry of the carbon black in an organic or other solvent with a liquid carrier containing a reagent for surface oxidation of the carbon black in a counter current mixing reactor whereby to obtain oxidation of the carbon black with the reagent and the formation of a surface oxidised carbon black as a dispersion of nanoparticles in the liquid carrier and solvent mixture.

Suitable counter current mixing reactors include those used for hydrothermal synthesis of metals or metal oxides. They generally comprise an inlet for a first solution, an inlet for a second solution and an outlet for both of the first and second solutions.

The counter current mixing reactor may be a T-shaped or Y-shaped reactor. Preferably, however, it is a reactor in which the second inlet is diametrically opposed to the first inlet and is disposed in the outlet. Such a reactor is described, for example, in International Patent Application WO 2005/077505 A2, WO 2014/111703 A2 and WO 2015/075439 A1 (all of which are incorporated in their entirety by reference herein).

The counter current mixing reactor may, therefore, have a vertical configuration in which the first inlet, the second inlet and the outlet are co-axially disposed. The second inlet may comprise a shaped nozzle, in particular, a conical funnel.

The counter current mixing reactor may be provided with one or more of a preheater or cooler for heating or cooling one or both of the solution and liquid carrier.

The counter current mixing reactor may also be provided with one or more of a cooler or diluter for quenching the oxidation in the nanoparticle dispersion exiting the reactor.

The components of the counter current mixing reactor may be constructed from any suitable material. Suitable materials include stainless steel and fluorine containing polymers, such as a poly(fluoro)alkane, when the reagent or reaction mixture is corrosive to stainless steel.

In one embodiment, the method comprises feeding a solution or slurry containing the carbon black upwards through the first inlet and feeding the liquid carrier containing the reagent for surface oxidation of the carbon black downwards through the second inlet.

In another embodiment, the method comprises feeding a solution or slurry containing the carbon black downwards through the second inlet and feeding the liquid carrier containing the reagent for surface oxidation of the carbon black upwards through the first inlet.

Where a reagent requires an auxiliary compound, such as a base or an acid, for the surface oxidation, the auxiliary compound may be provided with the solution or slurry containing carbon black or with the liquid carrier containing the reagent for surface oxidation.

The surface oxidation of the carbon black may employ any reagent which is suitable for surface oxidation of carbon black by conventional batch processing. The reagent may, in particular, be basic hypochlorite (for example, sodium hypochlorite or potassium hypochlorite). Other suitable reagents include one or more oxidising agents such as hydrogen peroxide, diammonium peroxodisulphate (ammonium persulphate), sulphuric acid and nitric acid.

The method directly provides dispersions of nanoparticles of surface oxidised carbon black wherein the nanoparticles have mean diameter between 1 nm and 500 nm, for example, between 1 nm and 300 nm or between 1 nm and 150 nm or between 1 nm and 50 nm.

The method also directly provides for dispersions of nanoparticles of surface oxidised carbon black which have unimodal polydispersity. The dynamic light scattering (DLS) polydispersity index of these nanoparticle dispersions is narrow and may, in particular, be between 0.1 and 3.0, for example, 2.0 or less, or even 1.0 or less.

The method further directly provides dispersions of nanoparticles of surface oxidised carbon black which have D50 or D97 median diameter between 10 nm and 300 nm, for example, between 10 nm and 150 nm, and in particular, between 1 nm and 50 nm.

The nanoparticle dispersions may exhibit a D50, D90 or even D97 median diameter which is lower than that for nanoparticles dispersions obtained by batch processing.

These nanoparticle dispersions may be obtained irrespective of particle size of the starting carbon black. The starting carbon black may, in particular, comprise particles of mean diameter between 10 nm and 100 µm. Suitable starting carbon blacks, which are generally hydrophobic, include NIPex^{®} 160 IQ (average primary particle size 20 nm and oil absorption number 128 ml/100 g following ASTM D2414; supplied by Grolman Ltd (UK)).

The particle size of the nanoparticles (and surface area), the degree of surface oxidation of the carbon black and the stability of the nanoparticle dispersions may be controlled by selection in one or more of the process parameters for oxidation in the counter current mixing reactor and to a lesser extent selection of the organic or other solvent and the liquid carrier.

The process parameters include the amount of the carbon black in the solution or slurry, the temperature and pressure of each of the solution or slurry and the liquid carrier, the ratio of the flow rates of the solution or slurry and the liquid carrier in the reactor, and the residence times of the solution or slurry and the liquid carrier.

The selection may also control the mode and/or the polydispersity of the nanoparticle dispersion and, in particular, the polydispersity index of the nanoparticle dispersion.

In embodiments, the method is carried at a reactor temperature between 20°C and 120°C, for example, between 20°C and 80°C or between 20°C and 60°C or between 20°C and 25°C.

In these embodiments, the method may be carried at ambient or higher pressure and, in particular, at pressures between 1 bar (0.1 MPa) and 250 bar (25 MPa), for example, between 1 bar (0.1 MPa) and 120 bar (12 MPa) or between 1 bar (0.1 MPa) and 100 bar (10 MPa) or at 1 bar (0.1 MPa)

In embodiments, the concentration of the starting carbon black in the solution or slurry may be between 5 wt/wt% and 50 wt/wt% carbon black solids depending on the molecular weight of the organic or other solvent. It may, for example, be between 5 wt/wt% and 30 wt/wt% or between 5 wt/wt% and 20 wt/wt% or between 5 wt/wt% and 10 wt/wt% when the solvent is water.

The ratio of flow rates of the liquid carrier to the solution or slurry of carbon black (which may be controlled by pumps provided with the reactor) may be between 1:10 and 10:1, for example, between 1:10 and 2:1, 5:1 or 8:1.

The residence time of the carbon black in the counter current mixing reactor (which may be controlled at least in part by selection in the length of the outlet) may be between 5 seconds and 120 minutes, for example, between 5 seconds and 60 minutes or between 30 seconds and 15 minutes or between 30 seconds and 5 minutes.

In one embodiment, the method is carried out at a temperature between 20°C and 60°C at ambient pressure (0.1 MPa) with a ratio of flow rates of 2:1 and residence time of 15 minutes.

The method may further comprise concentrating the dispersion by removing the organic or other solvent and, optionally, at least some of the liquid carrier. The method may further comprise removing unreacted reagent and/or reaction by-product from the dispersion when either or both are present.

The organic solvent, unreacted reagent and or by-product may be removed by any suitable method including filtration, ultrafiltration, centrifugation and the like.

In one embodiment, the method comprises concentrating the dispersion by centrifugation to a pellet and, after washing and oven drying, redispersing the surface oxidised carbon black in a suitable liquid carrier.

Note that method does not require the density of the solution or slurry containing the carbon black to be different to that of the liquid carrier - but the organic or other solvent containing the carbon black should be, at least in part, miscible with the liquid carrier.

Note further that the organic or other solvent and the liquid carrier are not necessarily different. The other solvent and the liquid carrier may be the same and, in some embodiments, they both comprise water.

The organic solvent or other solvent or a liquid carrier need not be used in near critical or supercritical state. The method may, however, use a liquid carrier such as water in its near critical or supercritical state.

The organic or other solvent may be a liquid or a gas solvent. It may comprise any suitable organic or other solvent including, but not limited to, water, ethyl acetate, ethanol, methanol, diethyl ether, tetrahydrofuran, dimethylformamide, dimethyl sulfoxide, N-methyl-2-pyrrolidone, acetone, ethylene glycol, propylene glycol and isopropyl alcohol as well as mixtures thereof.

The liquid carrier may be water or an aqueous based carrier. The aqueous based carrier may comprise one or more of a polyol, such as ethylene glycol, propylene glycol or a polyol having at least 5 carbon atoms, such as those described in International Patent Application WO 2014/127050 A1.

As mentioned above, the method may comprise concentrating the dispersion by removing only the organic or other solvent from the dispersion.

Alternatively, the method may comprise concentrating the dispersion by removing the organic or other solvent together with some or all of the liquid carrier.

The concentration may be carried out by any suitable method including evaporation, such as rotary evaporation under vacuum or a partial vacuum, centrifugation, filtration or ultrafiltration.

In the case of evaporation, the removal of the organic or other solvent may be carried out at a first temperature and the removal of liquid carrier may be carried out at a second temperature higher than the first.

The method may also comprise removing unreacted reagent or by-product when it is present. The removal of the reagent or by-product may be carried out by any suitable method including centrifugation, filtration or ultrafiltration.

The removal may require or result in the isolation of the nanoparticles from the dispersion. In that case, the method may further comprise re-suspending the nanoparticles in a suitable liquid carrier. Of course, the nanoparticles may be washed and/or dried prior to their resuspension.

The method directly provides a nanoparticle dispersion in which the concentration of nanoparticles of the surface oxidised carbon black is between 5 wt/wt% and 50 wt/wt%. It may be, for example, between 5 wt/wt% and 30 wt/wt% or between 5 wt/wt% and 15 wt/wt% or between 5 wt/wt% and 10 wt/wt% when the solvent is water.

The method may, therefore, provide a nanoparticle dispersion of a surface oxidised carbon black which can be used as an ink concentrate for inkjet printing without further treatment.

The method provides a surface oxidised carbon black which appears to be different from that obtained by a corresponding batch oxidation of nanoparticles of carbon black.

The method may provide nanoparticle dispersions in which the degree of surface oxidation of the nanoparticles is greater or less than that obtained by the corresponding batch process.

The dispersions may, in particular, have a zeta potential of magnitude greater than or lower than that of the dispersion obtained by the corresponding batch process.

In one embodiment, in which the reagent is basic hypochlorite (for example, a mixture of bleach and sodium or potassium hydroxide) the method provides surface oxidised carbon black wherein the degree of surface oxidation of the carbon black is less than that obtained by the corresponding batch process.

The magnitude of the zeta potential of the dispersion obtained by this embodiment is less than that of a dispersion obtained by the corresponding batch process (viz. less than about 63.9 mV).

The method may provide nanoparticle dispersions which are equally or more stable than the nanoparticle dispersions obtained by the corresponding batch process. The nanoparticle dispersions may, in particular, be stable at standard room temperature and pressure for longer than six months.

Without wishing to bound by theory, it appears that the increased stability of the nanoparticles dispersions obtained by the method may result from a different distribution of functional groups on the surface oxidised nanoparticles as compared to that obtained by the corresponding batch process.

Whilst each surface oxidised carbon black may contain one or more of the functional group carboxylate (-CO₂⁻), lactone, ether, phenol, carbonyl, ether, epoxide, anhydride, or quinone, the surface oxidised nanoparticles obtained by the present method may have a higher content of phenol, ether and carbonyl (which are observed in the literature to be intermediates for carboxylate in the oxidation of organic aromatic compounds).

In the basic hypochlorite embodiment, the volatile content of the surface oxidised nanoparticles (as measured by temperature programmed desorption in an inert atmosphere of nitrogen at heating rate 3°C per minute to about 900°C) is 5% higher or more, for example, between 10% and 50% or between 10% and 20% higher as compared with the volatile content of surface oxidised nanoparticles obtained by the corresponding batch process.

The method may enable the tuning of surface oxidised carbon black dispersions not just for ink stability but also for ink jet printing performance.

It may provide for an ink concentrate or ink with better adherence to ink jet printing media as compared to an ink concentrate or ink prepared from nanoparticles of surface oxidised carbon black obtained from a corresponding batch process.

Note that the method provides a self-dispersing surface oxidised carbon black and stable nanoparticle dispersions of surface oxidised carbon black in aqueous based solvents - without the need for a wetting agent and/or a dispersant.

In other words, the method provides dispersions of nanoparticles of a surface oxidised carbon black wherein the dispersion is substantially free from wetting agent and/or dispersant. In that case, the nanoparticles may consist essentially of nanoparticles of surface oxidised carbon black.

Nonetheless, it may be advantageous to provide one or more of a wetting agent and a dispersant in the dispersions in order to facilitate prolonged storage or better inkjet performance of the ink composition. The one or more of a wetting agent and a dispersant may be introduced after the dispersant has exited the counter current mixing reactor by addition to the exiting dispersion or by addition to the concentrated dispersion or by addition to a reconstituted dispersion.

Alternatively, the one or more of a wetting agent and a dispersant may be introduced to the counter current mixing reactor. In that case, the solution or slurry of the carbon black may contain one or more of a wetting agent and a dispersant. Alternatively, or additionally, the liquid carrier may contain one or more of a wetting agent and a dispersant.

In one embodiment, the liquid carrier contains a wetting agent and the method comprises adding a dispersant to the nanoparticle dispersion prior to the removal of the organic solvent and at least some of the liquid carrier. In another embodiment, the solution or slurry containing the organic pigment and/or the liquid carrier containing the reactant for surface oxidation of the carbon black contains only a wetting agent.

Note that one or more of a wetting agent and a dispersant is used the mass amount may be substantially less than the mass amount that must be used following surface oxidation of carbon black by batch processing.

When one or more of a wetting agent and a dispersant are used, the method may provide that the concentration of wetting agent in the final nanoparticle dispersion of surface oxidised carbon black is between 0.5 wt/wt% and 5.0 wt/wt%, for example, between 0.5 wt/wt% and 3.0 wt/wt%.

The method may alternatively or additionally provide that the concentration of dispersant in the final nanoparticle dispersion is between 0.5 wt/wt% and 5.0 wt/wt%, for example, between 0.5 wt/wt% and 3.0 wt/wt%.

The one or more of a wetting agent and a dispersant may comprise an anionic surfactant or a non-ionic surfactant which is conventionally used for inkjet compositions.

Suitable anionic surfactants include, but are not limited to, alkyl sulfates, alkyl ether sulfates, alkyl aryl sulfonates (for example, a linear alkyl benzene sulfonate), α-olefin sulfonates, alkali metal or ammonium salts of alkyl sulfates, alkali metal or ammonium salts of alkyl ether sulfates, alkyl phosphates, silicone phosphates, alkyl glycerol sulfonates, alkyl sulfosuccinates, alkyl taurates, alkyl sarcosinates, acyl sarcosinates, sulfoacetates, alkyl phosphate esters, monoalkyl maleates, acyl isothionates, alkyl carboxylates, phosphate esters, sulfosuccinates, lignosulfonates and combinations thereof.

Other suitable anionic surfactants include sodium lauryl sulfate, sodium lauryl ether sulfate, ammonium lauryl sulfosuccinate, ammonium lauryl sulfate, ammonium lauryl ether sulfate, sodium dodecylbenzene sulfate, triethanolamine dodecylbenzene sulfate, sodium cocoyl isothionate, sodium lauroyl isothionate and sodium N-lauryl sarcosinate.

Suitable non-ionic surfactants include, but are not limited to, monoand di-alkanolamides, amine oxides, alkyl polyglucosides, ethoxylated silicones, ethoxylated alcohols, ethoxylated carboxylic acids, ethoxylated fatty acids, ethoxylated amines, ethoxylated amides, ethoxylated alkylolamides, ethoxylated alkylphenols, ethoxylated glyceryl esters, ethoxylated sorbitan esters, ethoxylated phosphate esters, block copolymers (for example, polyethylene glycolpolypropylene glycol block copolymers), glycol stearate, glyceryl stearate and combinations thereof.

There is disclosed herein a dispersion of nanoparticles of a surface oxidised carbon black in a liquid carrier having a zeta potential of magnitude less than about 63.9 mV which is obtained or obtainable by the first aspect of the invention.

There is further disclosed herein a dispersion of nanoparticles of a surface oxidised carbon black having mean diameter between 1 nm and 500 nm wherein the dispersion has unimodal polydispersity and dynamic light scattering (DLS) polydispersity index between 0.1 and 3.0. The dispersions disclosed herein may have a zeta potential of magnitude less than about 63.9 mV.

The dispersions disclosed herein may be substantially free from wetting agent and/or dispersant.

There is further disclosed herein an ink concentrate for digital inkjet printing, comprising the dispersions disclosed herein.

There is further disclosed herein nanoparticles of surface oxidised carbon black capable of providing a dispersion in deionised water having a zeta potential of magnitude less than about 63.9 mV which are obtained or obtainable by the first aspect of the invention.

There is further disclosed herein nanoparticles of a surfaced oxidised carbon black having mean diameter between 1 nm and 500 nm and capable of providing a dispersion having unimodal polydispersity and a polydispersity index between 0.1 and 3.0. The nanoparticles disclosed herein may be capable of providing a dispersion in deionised water having a zeta potential of magnitude less than about 63.9 mV.

Note that the zeta potential is to be measured using an optical method, such as electrophoretic light scattering, in accordance with ISO 13099-2; 2012 Optical Methods. It may, in particular, be determined using a Malvern Instruments (Zetasizer^{®}) Nano ZS particle sizer fitted with zeta potential cell at standard temperature and pressure.

There is further disclosed herein a dispersion of the nanoparticles disclosed herein in an aqueous based liquid carrier.

There is further disclosed herein an ink concentrate for digital inkjet printing, comprising the dispersion of the nanoparticles disclosed herein in an aqueous based liquid carrier.

There is further disclosed herein a method for the surface modification of an organic pigment, the method comprising continuously mixing: a solution or slurry of the organic pigment in an organic or other solvent with a liquid carrier containing a reagent for surface modification of the pigment in a counter current mixing reactor whereby to obtain reaction of the organic pigment with the reagent and the formation of a surface modified pigment as a dispersion of nanoparticles in the liquid carrier and solvent mixture; optionally, removing unreacted reagent and/or by-product from the dispersion when present; and optionally, concentrating the dispersion.

Suitable organic pigments include alizarin, anthoxanthin, arylide yellow, azo dye, billin, bistre, caput mortuum, carbon black, carmine, crimson, diarylide pigment, dibromoanthanthrone, dragon's blood, gamboge, Indian yellow, indigo dye, naphthol AS, naphthol red, ommochrome, perinone, phthalocyanine blue BN, phthalocyanine green G, pigment blue 15:3, pigment violet 23, pigment yellow 10, pigment yellow 12, pigment yellow 13, pigment yellow 16, pigment yellow 81, pigment yellow 83, pigment yellow 139, pigment yellow 180, pigment yellow 185, pigment red 208, quinacridone, rose madder, rylene dye, sepia and Tyrian purple.

Embodiments of the dispersions and the nanoparticles disclosed herein will be apparent from the disclosure relating to the first aspect of the present invention.

The surface modification of the organic pigment may employ any reagent which is suitable for surface modification of that pigment by conventional batch processing.

The reagent may, in particular, be an oxidising agent selected from the group consisting of basic hypochlorite, hydrogen peroxide, sulphuric acid and nitric acid.

The reagent may provide a surface modified pigment comprising one or more functional groups selected from the group consisting of oxygen (-O⁻), dioxygen (-O₂²⁻); carboxylate (-CO₂⁻); nitrite (-NO₂⁻), nitroso (-NO), sulphonate (-SO₃⁻) and their C₁-C₆ alkyl or C₆-C₁₀ aryl esters.

Alternatively, or additionally, the reagent may provide a surface modified pigment comprising one or more functional groups selected from the group consisting of aryl sulphonate (-Ar-SO₃-), aryl carboxylate (-Ar-CO₂-), aryl ester (-Ar-CO₂R) where aryl is substituted or unsubstituted phenyl (Ph), naphthyl (Np), pyridyl (Py), etc and R is C₁-C₆ alkyl or C₆-C₁₀ aryl; and amino acids.

A surface modification of carbon black and other organic pigments (via in situ diazonium salt formation) by aryl sulphonate ester is described, for example, in US 5 922 118. Other reagents for surface modification of organic pigments will be known from the batch processes used in the art.

The present invention will now be described in more detail with reference to the following non-limiting Example and the accompanying drawings in which:
Figure 1 is a schematic illustration of a counter current reactor, described in International Patent Application WO 2005/077505 A2, which is suitable for carrying out the method of the present invention;
Figure 2 is a schematic illustration of surface oxidation of carbon black in accordance with one embodiment of the present invention;
Figure 3 is a graph showing the FT-IR absorbance spectra of surface oxidised carbon black obtained in accordance with several embodiments of the present invention;
Figure 4 shows graphs showing FT-IR absorbance spectra of a surface oxidised carbon black obtained in accordance with one embodiment of the present invention as compared with the FT-IR absorbance spectrum of a surface oxidised carbon black manufactured by a corresponding batch process (SDP-100);
Figure 5 shows photographs highlighting the stability of dispersions of a surface oxidised carbon black obtained in accordance with the present invention as compared to the stability of commercially available carbon black (NIPex^{®} 160 IQ);
Figure 6 shows graphs obtained by dynamic light scattering showing nanoparticle size distributions of a dispersion of surface oxidised carbon black obtained in accordance with the present invention and a dispersion of a surface oxidised carbon black manufactured by a corresponding batch process (SDP-100);
Figure 7 shows graphs obtained by single particle size analysis showing nanoparticle size distributions of a dispersion of surface oxidised carbon black obtained in accordance with the present invention and a dispersion of a surface oxidised carbon black manufactured by a corresponding batch process (SDP-100);
Figure 8 are graphs showing the zeta potential of the dispersion of a surface oxidised carbon black obtained in accordance with the present invention and the zeta potential of a dispersion of a surface oxidation carbon black obtained by a corresponding batch process (SDP-100); and
Figure 9 are graphs showing thermal desorption of nanoparticles of surface oxidised carbon blacks obtained in accordance with the present invention and nanoparticles of a surface oxidised carbon black manufactured by a corresponding batch process (SDP-100).

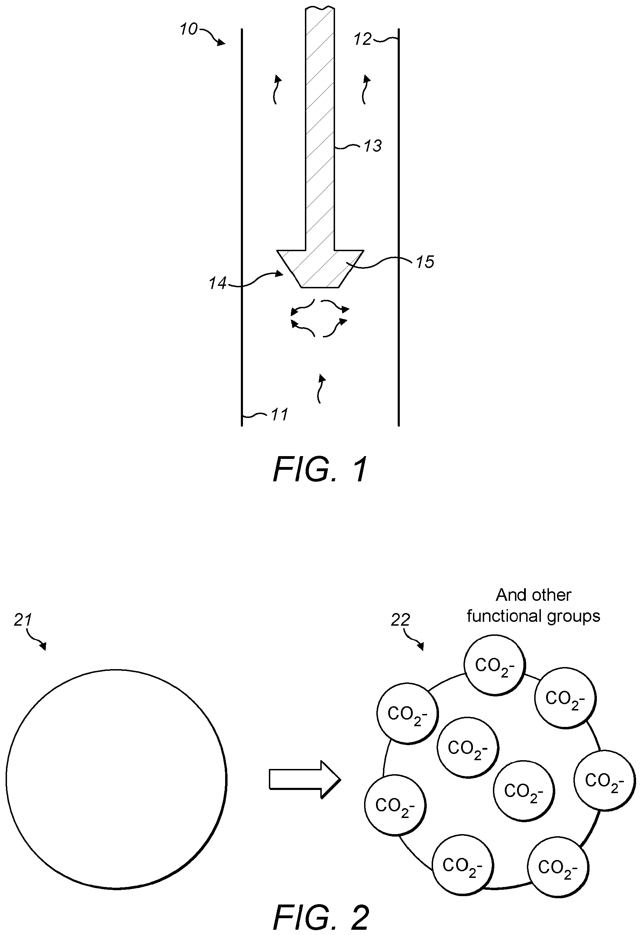

Referring now to Figure 1, a counter current mixing reactor, generally designated 10, comprises a first inlet 11 and an outlet 12 in which a second inlet 13 is diametrically opposed to the first inlet 11 and disposed in the first inlet 11. The first inlet 11 and the second inlet 13 are co-axial with one another and the second inlet 12 provides a nozzle 14 in the shape of a conical funnel 15.

Note that the reactor is associated with a pumping system including respective pumps providing an up-flow to the first inlet 11 and a down-flow to the second inlet 13 (not shown).

### Examples

### Surface Oxidation of Carbon Black

A study of the surface oxidation of a commercially available carbon black (NIPex^{®} 160 IQ from Grolman Ltd, UK) in the counter mixing reactor described in international patent application WO 2005/077505 A2 was undertaken.

Note that, for this study, the material of the pipe providing the first inlet 11 and the outlet 12 and the material of the pipe providing the second inlet 13 and the nozzle 14 is polytetrafluoroethylene (PTFE).

The study commenced with a series of small scale batch tests to determine the most appropriate oxidising agent and suitable amounts of carbon black and oxidising agent enabling temperature control.

In these tests, a known quantity of carbon black (1 g, 2 g or 3 g) was vigorously stirred with an excess of the oxidising agent for a period of about 8 hours. After quenching of the reaction (by dilution), the surface oxidised carbon black was collected by centrifugation, washed with water and oven dried to a powder.

The Fourier Transform Infra-Red (FT-IR) absorbance spectrum for each powder was examined - and compared with the absorbance spectrum of a commercially available surface oxidised carbon black (SensiJet Black; SDP-100; Sensient Colours (UK) Ltd) manufactured by a batch process.

A Bruker^{®} Tensor 27 FT-IR spectrometer having an attenuated total reflectance (ATR) attachment with a diamond/ZnSe crystal plate was used.

Although the quality of the spectrum in each case was poor (because of the similar refractive index of carbon black to the ATR diamond), the FR-IR spectrum of SDP100 exhibited clear differences over the spectrum of carbon black - most obviously in the presence of a broad peak centred around 1555 cm⁻¹.

Oxygen labelling studies (reported in the literature) suggest that this broad peak results from overlap of carbonyl stretching modes with aromatic ring breathing modes. The breathing modes are enhanced by conjugation to the carbonyl group and the stretching frequencies of the carbonyl group is red-shifted (to about 1680 cm⁻¹) by conjugation to carbon black.

The intensity of the broad peak is an indication of the degree of surface oxidation of carbon black - although care must be taken given the poor data quality. But a comparison of intensity in this peak between the different spectra can be made with reference to a carbonyl stretching band at around 1725 cm⁻¹ which remains relatively unchanged by the oxidation.

Note, however, that an accurate comparison must take some account of the sloping base line - it being observed that different baseline corrections have a marked effect on the size and position of the broad peak.

The FT-IR spectra revealed that a 5% or 10% v/v aqueous solution of bleach containing 1 mass equivalent (for carbon black) of sodium hydroxide was most efficient for surface oxidation of carbon black as compared to 5% or 10% v/v aqueous solution of bleach alone, an aqueous solution 30% v/v hydrogen peroxide, an aqueous solution of 5% v/v sulphuric acid and (NH₄)₂S₂O₈ and an aqueous solution of 5% v/v nitric acid.

The temperature during reaction of a 10% v/v aqueous solution of bleach containing 1 mass equivalent of sodium hydroxide with known quantities of carbon black (1 g, 2 g, 3 g) was determined (over about 10 minutes) by a thermocouple and temperature logging system to be within appropriate safety limits.

The mass equivalent of sodium hydroxide in the 10% v/v aqueous bleach solution was varied (between 1 and 5 times as compared to the mass of carbon black) during further tests - but tended to result in the appearance of a broad absorption peak at around 1400 cm⁻¹ rather than the broad absorption peak at 1550 cm⁻¹ (suggesting other, alcohol oxidation products).

The initial flow test concentration parameters were taken to be about 1 g of carbon black and 1 g of sodium hydroxide per 10 ml of water and 10% v/v aqueous bleach solution.

In these flow tests, an aqueous bleach solution containing sodium hydroxide was pumped in a downflow to the second inlet 12 and the slurry of carbon black in water was pumped in an up-flow to the first inlet 11. The relative flow rate varied between 1:1 and 1:2 (carbon black slurry to aqueous bleach solution). Table 1 outlines the concentration parameters for the initial flow tests using the counter current mixing reactor.

In each case, the reaction was quenched (by dilution) immediately the flow exited the apparatus. The product was collected by centrifugation, washed with water and oven dried to a powder.

**Table 1**

| **Sample No.** | **Reagent** | **Slurry** |
|---|---|---|
| Se-013A | 5% v/v aqueous bleach solution containing 25 g/L NaOH | 25 g/L C black in water |
| Se-013C | 10% v/v aqueous bleach solution containing 50 g/L NaOH | 50 g/L C black in water |
| Se-013D | 10% v/v aqueous bleach solution containing 25 g/L NaOH | 50 g/L C black in water |

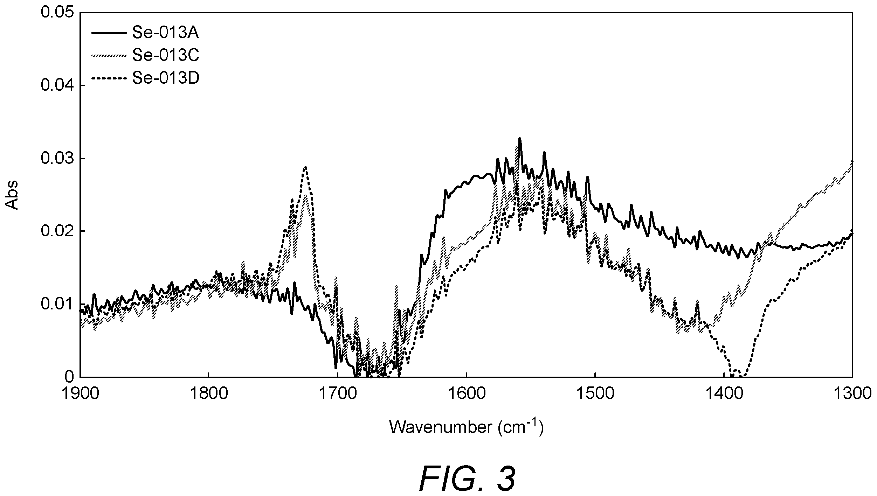

The FT-IR absorption spectra of the collected surface oxidised carbon black are compared in Figure 3. As may be seen, the surface oxidation of carbon black appears to be substantially less when the concentration for the aqueous bleach solution is 5% v/v as compared to the surface oxidation when the concentration of aqueous bleach solutions is 10% v/v.

The ratio of flow rates of the carbon black slurry and the aqueous bleach solution containing sodium hydroxide were varied between 1 and 6 - but appeared to have no appreciable effect on the peak height ratios shown in Figure 3.

Further, the pre-heating of the aqueous bleach solution containing sodium hydroxide to 40°C appeared to have no appreciable effect on the peak height ratios shown in Figure 3 (even when the flow rate of the aqueous bleach solution containing sodium hydroxide was twice that of the aqueous slurry of carbon black).

The lesser degree of surface oxidation in the flow tests is consistent with a shorter reaction time in the flow tests as compared to the batch tests.

The reactor was modified to extend the residence time (by adjusting the up-flow and down-flow pressures) to several minutes and at different temperatures. Table 2 sets outlines the different temperatures.

The FT-IR spectra for Se-016 B to D were similar but displayed a ratio of intensity of peak at 1725 cm⁻¹ over peak at 1555 cm⁻¹ less than that of SDP-100 (viz., less than 1:2). The FT-IR spectrum for SE-016A showed no peak at 1723 cm⁻¹ - suggesting some reaction other than the desired oxidation.

**Table 2**

| **Sample No.** | **Temperature/°C** |
|---|---|
| Se-016A | 30 |
| Se-016B | 40 |
| Se-016C | 50 |
| Se-016D | 60 |

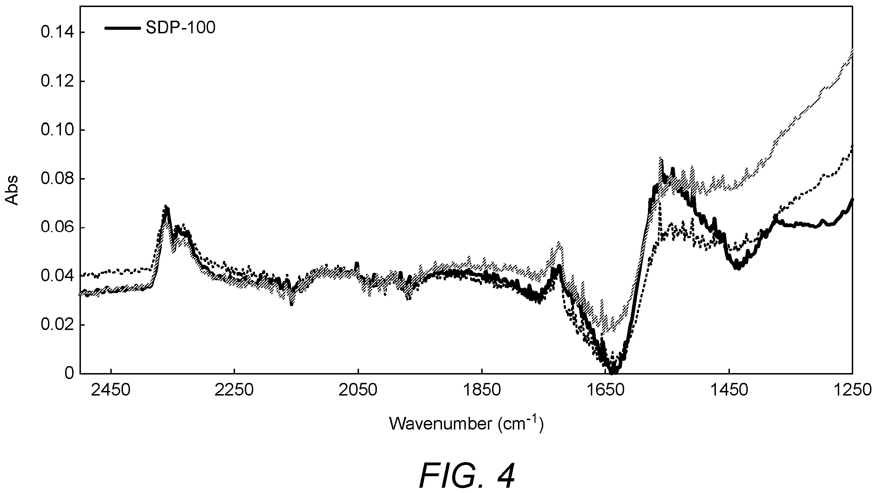

Referring now to Figure 4, the fitting of an absorption spectrum obtained for Se-016D to a linear baseline leads to a carboxylate band absorption intensity that is substantially similar to that found for the surface oxidised carbon black (SDP-100) obtained by conventional oxidation of carbon black.

However, the fitting is not so good in the other areas of the spectrum. In these areas, the fitting to an exponential baseline (log) leads to better agreement but substantially reduces the intensity of the carboxylate band absorption.

The dispersions for Se-016B to Se-016D displayed a surprising stability as compared to a dispersion of SFP-100 in water - requiring extensive centrifugation (4500 rpm for 3 hours) to obtain a pellet sufficient for FR-IR analysis.

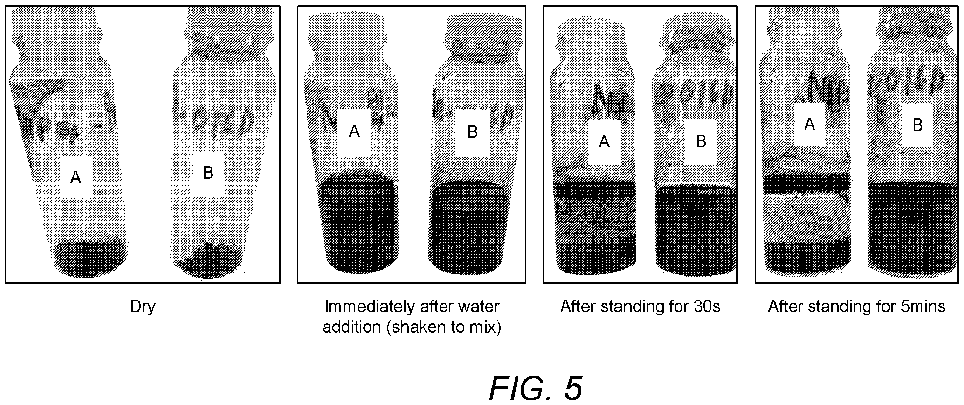

Referring now to Figure 5, there are shown photographs in which the dispersion of a sample of the surface oxidised carbon black (Se-016D, designated B) in water is compared with a dispersion of the untreated carbon black (NIPex^{®} 160 IQ, designated A) in water.

As may be seen, the dispersion of the surface oxidised carbon black (B) is relatively stable as compared to the dispersion of the untreated carbon black (A).

### Characterisation of Surface Oxidised Carbon Black

Samples of the dispersion Se-016D obtained by the flow tests were examined, after concentrating and decanting any sediment, by Dynamic Light Scattering (DLS).

The samples were obtained by rotary evaporation of the crude dispersion at room temperature followed by rotatory evaporation at 45° until a concentrate having a surface oxidised carbon black loading of about 10 to 15 wt/wt% was obtained. The concentrates were prepared for examination by dilution of 1 mL of the supernatant fluid in 20 mL of deionised water.

The samples were analysed at 25 °C in a 10 mm cuvette using a Malvern Instruments Nano ZS particle sizer fitted with a back-scattering detector at 173° with an incident laser source (He-Ne laser with wavelength 632.8 nm).

A CONTIN algorithm was used to deconvolute the scattered light signal and give a size distribution. The analysis assumed a continuous phase of pure water (viscosity = 0.8872 cP; refractive index = 1.330) for the measurement settings. The Z-average size of the nanoparticles was taken from the raw cumulants data fit from the DLS instrument.

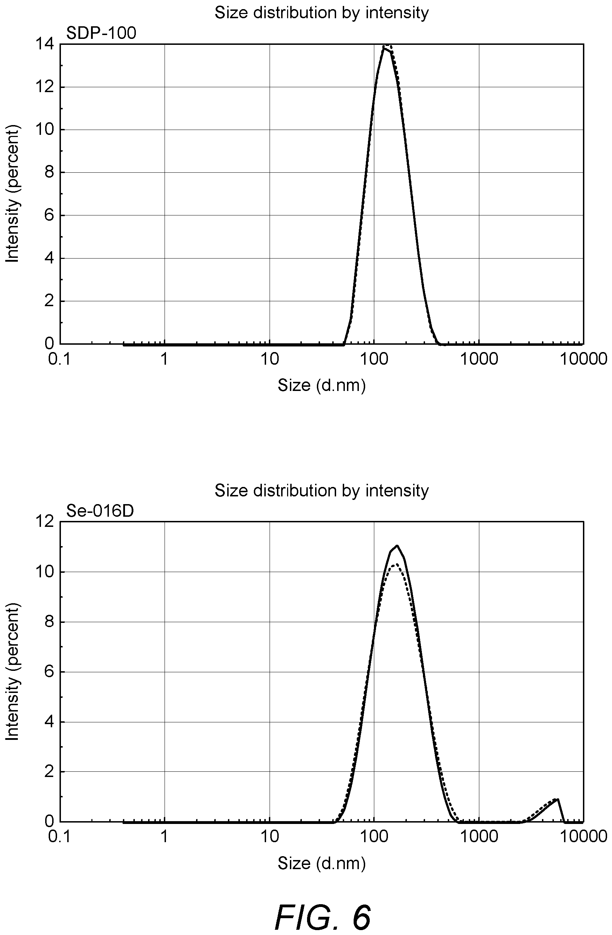

Figure 6 shows graphs in which the nanoparticle size distribution of the samples Se-016D are compared with the nanoparticle size distribution of samples of SDP-100 in deionised water.

As may be seen, the Z-average particle size of the nanoparticles of the Se-016D and SDP-100 samples are respectively about 152.5 nm and about 128.1 nm. The DLS polydispersity index of the samples Se-016D and SDP-100 were determined to be 0.250 and 0.146 respectively.

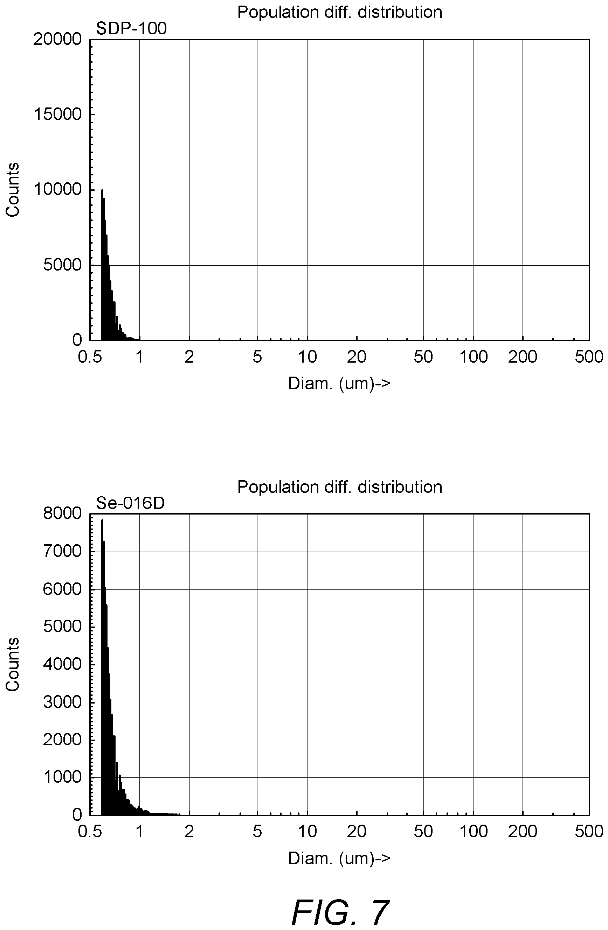

Figure 7 shows graphs obtained by single particle optical analysis (SPOS) of a sample of the dispersion obtained from the flow test Se-016D and a sample of a dispersion of SDP-100 in deionised water. The analyses were undertaken using an Accusizer^{®} 780 autodilution particle sizing instrument (from Particle Sizing Systems, USA) with particle counter and LE-400-05 SUM sensor.

As may be seen, the graphs show that particles having diameter over 1000 nm are not present in either dispersion - and that the minor peak in the DLS spectrum of the Se-016D sample is an artefact. The dispersion Se-016D is, therefore, shown to be unimodal.

A study of the zeta potential of the respective dispersions was also undertaken using a Malvern Instruments Nano ZS particle sizer fitted with zeta potential cell.

The zeta potential is a measure of the surface charge of the nanoparticles in solution. The electric potential at the boundary between the nanoparticle and a thin layer of ions of opposite charge is measured.

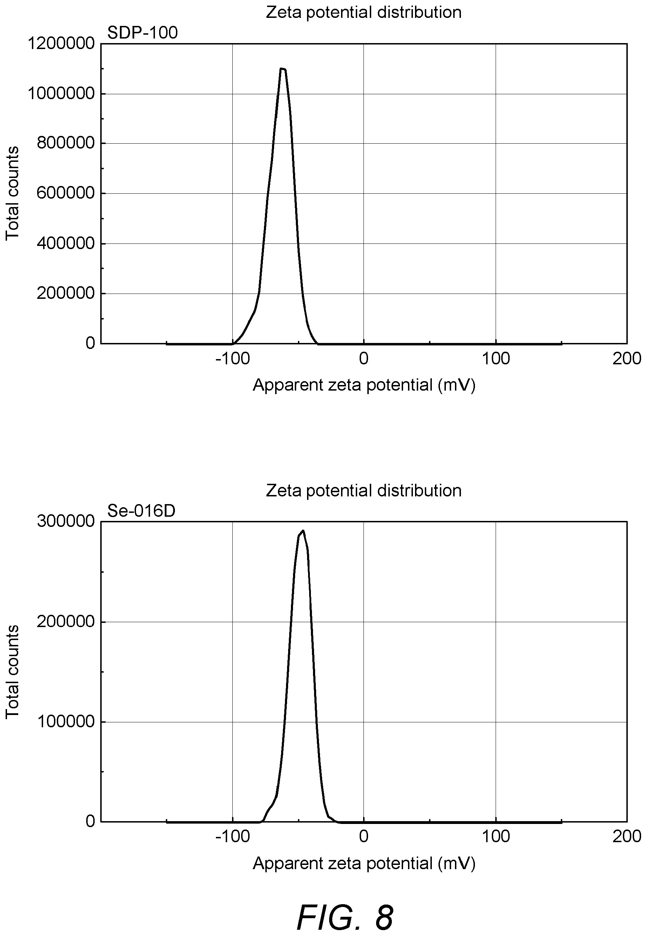

Figure 8 shows that the zeta potential in deionised water of the surface oxidised carbon black Se-016D is - 49.0 mV and that the zeta potential of SDP-100 in deionised water is - 69.3 mV.

These zeta potential measurements suggest that the surface oxidised carbon black obtained by the continuous process has a degree of surface oxidation which is 76.7% of that of the surface oxidised carbon black obtained by the batch process.

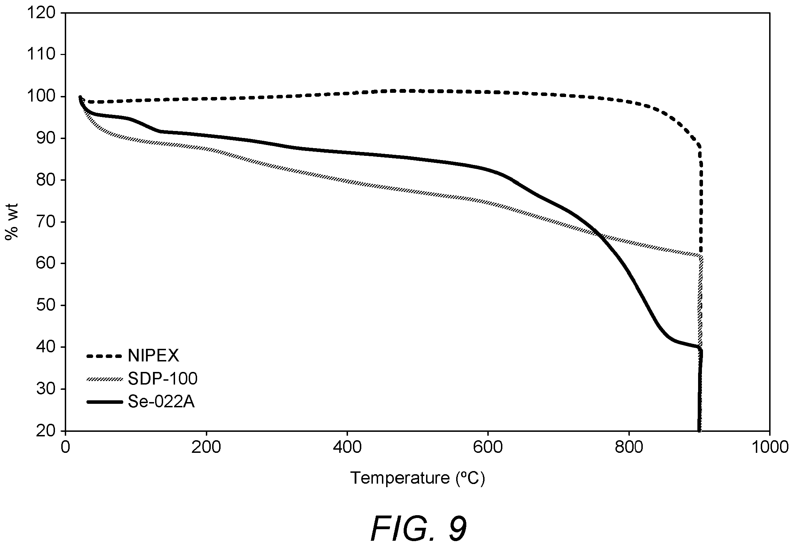

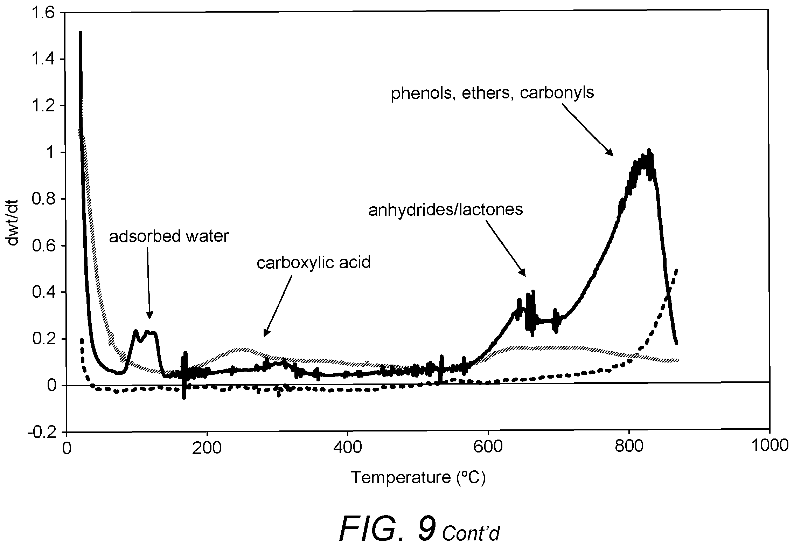

Figure 9 shows of percentage weight loss as a function of temperature and the rate of weight loss at a given temperature obtained by a conventional thermogravimetric analysis of a sample Se-022A prepared as described at ambient pressure with reactor temperature of 60°C and residence time of 4 minutes above as compared to NIPex^{®} 160 IQ and SDP-100.

The thermogravimetric analysis was performed using a temperature programmed desorption in an inert atmosphere of nitrogen at heating rate 3°C per minute to about 900°C).

The weight loss up to 100°C can be ignored in that it is largely due surface absorbed water. Differences between the surface oxidised carbon blacks Se-022A and SDP-100 are thought to result from the drying process rather than the oxidation process.

Both the surface oxidised carbon blacks show weight loss at around 300°C - which is attributed in the literature to the decomposition of carboxylate functional groups. However, the starting temperature and temperature of peak weight loss for Se-022A (285°C and 305°C respectively) is different to that for SDP-100 (200°C and 250°C) as well as the overall weight loss here (2% and 5% respectively) suggests that a much greater proportion of carboxylic acid functional groups are present on the surface of SDP-100 as compared to Se-022A.

Both the surface oxidised carbon blacks show weight loss beginning at 580°C and continuing until 700°C - which is attributed in the literature to decomposition of anhydride and lactone functional groups. The weight loss of Se-022A (10%) over the range is greater than that of SDP-100 (7%) - suggesting that more anhydride and lactone functional groups are present on the surface of Se-022A as compared to SDP-100.

Only the surface oxidised carbon black Se-022A shows a weight loss beginning at 700°C and continuing until 860°C - which is attributed in the literature to decomposition of phenol, ether and carbonyl functional groups. The Se-022A loses another 14% of its starting weight. The absence of phenols, ethers and carbonyls in SDP-100 suggests a more complete oxidation as compared to Se-022A especially as phenol, ether and carbonyl species are observed as intermediate species for carboxylate in the oxidation of aromatic organic compounds.

### Performance of Surface Oxidised Carbon Black

A sample Se-018 of a surface oxidised carbon black was prepared as described above for Se-016D except that the residence time was extended to about an hour. The sample was washed by repeated concentrated by ultrafiltration to 1/5^{th} of starting volume and diluted to its original volume with deionised water. The washed sample was concentrated to 1/5^{th} of its starting volume to give a dispersion containing 5 wt/wt% solids content (lower than SDP-100).

A draw-down test was performed on office printer paper to assess the colour of the dispersion as compared to similar dispersions (5 wt/wt% in deionised water) of SDP-100 and NIPex^{®} 160 IQ. A 0.1 ml droplet of each dispersion was placed on the paper using a syringe and drawn down with the flat edge of a metal spatula.

The dispersion of NIPex^{®} 160 IQ showed hardly any adherence to the paper (light grey track) whereas the dispersion of SDP-100 adhered better (dark track) and the Se-018 dispersion adhered best (darkest track).

These studies clearly show a continuous process for the surface oxidation of carbon black providing nanoparticle dispersions. The surface oxidised carbon black obtained by the continuous process may be different from that obtained by the corresponding batch process and may exhibit higher stability and printing performance.

Accordingly, the present invention provides a single, continuous process for the preparation of stable dispersions of a surface oxidised carbon black with nanoparticle size suitable for ink jet printing.

The continuous process is easier to control as compared to the batch process and provides highly stable dispersions (for example, in water) without complex purification techniques or subsequent treatments.

The dispersions can be used directly in inkjet compositions or even in cosmetic compositions (requiring a high purity content).

Note that references herein to nanoparticles are references to particles having a mean diameter between 1 nm and 500 nm. References to ranges "between" a first value and a second value include the first value and the second value.

Note also that references herein to a reagent for the surface oxidation of carbon black include references to more than one reagent and, in particular, to mixtures of two or more chemical compounds which combine or otherwise provide a chemical species oxidising carbon black.

Note further that, except where context demands otherwise, references herein to a corresponding batch process are references to a batch process which uses the same reagent or reagents as the present method (but not necessarily the same concentrations, temperature, pressure, time, etc).

## Claims

1. A method for the surface oxidation of carbon black, the method comprising continuously mixing:
a solution or slurry of the carbon black in an organic or other solvent with a liquid carrier containing a reagent for surface oxidation of the carbon black in a counter current mixing reactor whereby to obtain reaction of the carbon black with the reagent and the formation of a surface oxidised carbon black as a dispersion of nanoparticles in the liquid carrier and solvent mixture.

2. A method according to Claim 1, further comprising removing unreacted reagent and/or by-product from the dispersion when present.

3. A method according to Claim 1 or Claim 2, further comprising concentrating the dispersion.

4. A method according to any preceding Claim, wherein the method provides a dispersion of nanoparticles of surface oxidised carbon black having mean diameter between 1 nm and 500 nm, preferably, between 10 nm and 300 nm;
and/or wherein the method provides a nanoparticle dispersion of surface oxidised carbon black having unimodal polydispersity;
and/or wherein the method provides a nanoparticle dispersion of surface oxidised carbon black having a dynamic light scattering (DLS) polydispersity index between 0.1 and 3.0, for example, 2.0 or less, or even 1.0 or less.

5. A method according to any preceding Claim, wherein the method provides a nanoparticle dispersion of a surface oxidised carbon black wherein the nanoparticles have a volatile content higher than that of nanoparticles of a surface oxidised carbon black produced by a corresponding batch oxidation of the carbon black;
and/or wherein the method provides a nanoparticle dispersion of surface oxidised carbon black having a concentration of nanoparticles between 5 wt/wt% and 50 wt/wt%, for example, between 5 wt/wt% and 30 wt/wt% or between 5 wt/wt% and 20 wt/wt% or between 5 wt/wt% and 10 wt/wt%;
and/or wherein the method provides a nanoparticle dispersion of surface oxidised carbon black having a zeta potential of magnitude less than about 63.9 mV in deionised water.

6. A method according to any preceding Claim, wherein the method provides a nanoparticle dispersion of surface oxidised carbon black substantially free from a wetting agent and/or dispersant;
and/or wherein the method is carried at a reactor temperature between 20°C and 120°C, for example, between 20°C and 80°C or between 20°C and 60°C;
and/or wherein the method is carried at a pressure of between 1 bar (0.1 MPa) and 250 bar (25 MPa), for example, between 1 bar (0.1 MPa) and 120 bar (12 MPa) or between 1 bar (0.1 MPa) and 100 bar (10 MPa)

7. A method according to any preceding Claim, wherein the residence time of the carbon black in the counter current mixing reactor is between 5 seconds and 60 minutes
and/or wherein the ratio of flow rates of the liquid carrier to the solution or slurry of carbon black is between 1:10 and 10:1
and/or wherein the reagent comprises basic hypochlorite and each of the organic or other solvent and the liquid carrier comprise water.

## Patentansprüche

1. Verfahren zur Oberflächenoxidation von Ruß, wobei das Verfahren kontinuierliches Mischen von Folgendem umfasst:
einer Lösung oder Aufschlämmung des Rußes in einem organischen oder anderen Lösungsmittel mit einem flüssigen Träger, der ein Reagens zur Oberflächenoxidation des Rußes in einem Gegenstrommischreaktor enthält, wodurch eine Reaktion des Rußes mit dem Reagens und die Bildung eines oberflächenoxidierten Rußes als Dispersion von Nanopartikeln in der Mischung aus flüssigem Träger und Lösungsmittel erhalten werden.

2. Verfahren nach Anspruch 1, ferner umfassend Entfernen von nicht umgesetztem Reagens und/oder Nebenprodukt aus der Dispersion, falls vorhanden.

3. Verfahren nach Anspruch 1 oder Anspruch 2, ferner umfassend Konzentrieren der Dispersion.

4. Verfahren nach einem der vorhergehenden Ansprüche, wobei das Verfahren eine Dispersion von Nanopartikeln aus oberflächenoxidiertem Ruß bereitstellt, der einen mittleren Durchmesser zwischen 1 nm und 500 nm aufweist, vorzugsweise zwischen 10 nm und 300 nm;
und/oder wobei das Verfahren eine Nanopartikel-Dispersion von oberflächenoxidiertem Ruß bereitstellt, der eine unimodale Polydispersität aufweist;
und/oder wobei das Verfahren eine Nanopartikel-Dispersion von oberflächenoxidiertem Ruß bereitstellt, der einen Polydispersitätsindex der dynamischen Lichtstreuung (DLS) zwischen 0,1 und 3,0 aufweist, beispielsweise 2,0 oder weniger oder sogar 1,0 oder weniger.

5. Verfahren nach einem der vorhergehenden Ansprüche, wobei das Verfahren eine Nanopartikeldispersion eines oberflächenoxidierten Rußes bereitstellt, wobei die Nanopartikel einen Gehalt an flüchtigen Bestandteilen aufweisen, der höher ist als der von Nanopartikeln eines oberflächenoxidierten Rußes, der durch eine entsprechende Batch-Oxidation des Rußes hergestellt wird;
und/oder wobei das Verfahren eine Nanopartikeldispersion von oberflächenoxidiertem Ruß bereitstellt, der eine Nanopartikelkonzentration zwischen 5 Gew.-% und 50 Gew.-% aufweist, beispielsweise zwischen 5 Gew.-% und 30 Gew.-% oder zwischen 5 Gew.-% und 20 Gew.-% oder zwischen 5 Gew.-% und 10 Gew.-%;
und/oder wobei das Verfahren eine Nanopartikeldispersion von oberflächenoxidiertem Ruß bereitstellt, der ein Zeta-Potential in der Größenordnung von weniger als etwa 63,9 mV in entionisiertem Wasser aufweist.

6. Verfahren nach einem der vorhergehenden Ansprüche, wobei das Verfahren eine Nanopartikeldispersion von oberflächenoxidiertem Ruß bereitstellt, der im Wesentlichen frei von einem Benetzungsmittel und/oder Dispergiermittel ist;
und/oder wobei das Verfahren bei einer Reaktortemperatur zwischen 20 °C und 120 °C durchgeführt wird, beispielsweise zwischen 20 °C und 80 °C oder zwischen 20 °C und 60 °C;
und/oder wobei das Verfahren bei einem Druck zwischen 1 bar (0,1 MPa) und 250 bar (25 MPa) durchgeführt wird, beispielsweise zwischen 1 bar (0,1 MPa) und 120 bar (12 MPa) oder zwischen 1 bar (0,1 MPa) und 100 bar (10 MPa).

7. Verfahren nach einem der vorhergehenden Ansprüche, wobei die Verweilzeit des Rußes in dem Gegenstrommischreaktor zwischen 5 Sekunden und 60 Minuten liegt
und/oder wobei das Verhältnis der Fließgeschwindigkeiten des flüssigen Trägers zu der Rußlösung oder -aufschlämmung zwischen 1:10 und 10:1 liegt
und/oder wobei das Reagens basisches Hypochlorit umfasst und sowohl das organische oder andere Lösungsmittel als auch der flüssige Träger Wasser umfassen.

## Revendications

1. Procédé permettant l'oxydation superficielle de noir de carbone, le procédé comprenant le mélange en continu :
d'une solution ou d'une bouillie de noir de carbone dans un solvant organique ou autre avec un vecteur liquide contenant un réactif permettant l'oxydation superficielle du noir de carbone dans un réacteur de mélange à contre-courant de sorte à obtenir une réaction du noir de carbone avec le réactif et la formation d'un noir de carbone oxydé en surface sous la forme d'une dispersion de nanoparticules dans le mélange du vecteur liquide et du solvant.

2. Procédé selon la revendication 1, comprenant en outre l'élimination du réactif n'ayant pas réagi et/ou d'un sous-produit de la dispersion lorsqu'ils sont présents.

3. Procédé selon la revendication 1 ou la revendication 2, comprenant en outre la concentration de la dispersion.

4. Procédé selon l'une quelconque des revendications précédentes, ledit procédé produisant une dispersion de nanoparticules de noir de carbone oxydé en surface présentant un diamètre moyen compris entre 1 nm et 500 nm, de préférence, entre 10 nm et 300 nm ;
et/ou ledit procédé produisant une dispersion de nanoparticules de noir de carbone oxydé en surface présentant une polydispersité unimodale ;
et/ou ledit procédé produisant une dispersion de nanoparticules de noir de carbone oxydé en surface présentant un indice de polydispersité par diffusion dynamique de la lumière (DLS) compris entre 0,1 et 3,0, par exemple, 2,0 ou moins, ou même 1,0 ou moins.

5. Procédé selon l'une quelconque des revendications précédentes, ledit procédé produisant une dispersion de nanoparticules de noir de carbone oxydé en surface dans laquelle les nanoparticules présentent une teneur en composés volatils supérieure à celle de nanoparticules de noir de carbone oxydé en surface produites par une oxydation en discontinu correspondante du noir de carbone ;
et/ou ledit procédé produisant une dispersion de nanoparticules de noir de carbone oxydé en surface présentant une concentration de nanoparticules comprise entre 5 % en p/p et 50 % en p/p, par exemple, entre 5 % en p/p et 30 % en p/p ou entre 5 % en p/p et 20 % en p/p ou entre 5 % en p/p et 10 % en p/p ;
et/ou ledit procédé produisant une dispersion de nanoparticules de noir de carbone oxydé en surface présentant un potentiel zêta d'amplitude inférieure à environ 63,9 mV dans de l'eau déminéralisée.

6. Procédé selon l'une quelconque des revendications précédentes, ledit procédé produisant une dispersion de nanoparticules de noir de carbone oxydé en surface sensiblement exempte d'un agent mouillant et/ou d'un dispersant ;
et/ou ledit procédé étant réalisé à une température de réacteur comprise entre 20°C et 120°C, par exemple entre 20°C et 80°C ou entre 20°C et 60°C ;
et/ou ledit procédé étant réalisé à une pression comprise entre 1 bar (0,1 MPa) et 250 bar (25 MPa), par exemple, entre 1 bar (0,1 MPa) et 120 bar (12 MPa) ou entre 1 bar (0,1 MPa) et 100 bar (10 MPa).

7. Procédé selon l'une quelconque des revendications précédentes, le temps de séjour du noir de carbone dans le réacteur de mélange à contre-courant étant compris entre 5 secondes et 60 minutes
et/ou le rapport des débits du vecteur liquide à la solution ou bouillie de noir de carbone étant compris entre 1:10 et 10:1
et/ou ledit réactif comprenant de l'hypochlorite basique et chacun parmi le solvant organique ou autre et ledit vecteur liquide comprenant de l'eau.
